# EUROPEAN PATENT APPLICATION

(11) **EP 2 923 785 A1**
(43) Date of publication of application: **30.09.2015**
(21) Application number: 15380004.0
(22) Date of filing: 16.02.2015
(51) Int. Cl.: B23B 47/28, B23B 49/02

(54) **DRILL POSITIONER WITH SIGHT**

(30) Priority: 26.03.2014 ES 201400237
(71) Applicant: Toledo Garcia, Miguel Angel, 28905 Getafe (Madrid) (ES)
(72) Inventor: Toledo Garcia, Miguel Angel, 28905 Getafe (Madrid) (ES)

(57) **Abstract**

The drill positioner with sight consist of a piece formed by the drill-fixing tool with sight tool, which contains drills (2)-(5), threads (7), sights (9) and sawdust evacuation channels (8)-(11), and auxiliary pieces like guide bushings (3) and board fixation screws (12).

The drill positioner with sight fixes the guide bushings (3) in a very stable way to achieve an accurate drilling process in any part of the board.

## Description

### SUBJECT OF THE INVENTION

The present invention describes a tool that allows the drilling of boards, facilitating the fixing and marking of the drilling holes.

The aim of the invention is to achieve a professional and accurate drilling process using guide bushings in the edges, sides and in the middle of the boards.

### PRIOR ART

The drilling of a wood board is carried out using drill bits, which drill the wood making cylindrical holes. Drilling machines can be either manual or automatic. Since the present invention is related to a manual drilling machine, I shall refer only to a manual drilling process.

The manual drilling process starts by measuring and marking several points where two or more boards are to be joined. The aforementioned points are then drilled and subsequently filled with wood dowel pins to assemble the boards.

The drilling process can be made by using tools like manual fixing guide bushings, multiple guide bushing strips and vertical drill presses.

### SUMMARY OF THE INVENTION

The drill positioner with sight can be made of metal, plastic or wood. The production process may vary depending on the material used.

Injection manufacturing: the drill-fixing tool with sight can be made in moulds by injection of either plastic or injected aluminium. After the injection process, it is necessary to remove the residual material through a machining process and it is also necessary a bush forming process in both the edge drill and the side drill plus a threading process of the board fixing threads.

For wood manufacturing or other metals manufacturing, it is necessary a machining process through the drilling and milling of wood or metal pieces. After this process it is necessary a bush forming process in both, the edge drill and the side drill and a threading process of the board fixing threads.

### BRIEF DESCRIPTION OF THE DRAWINGS

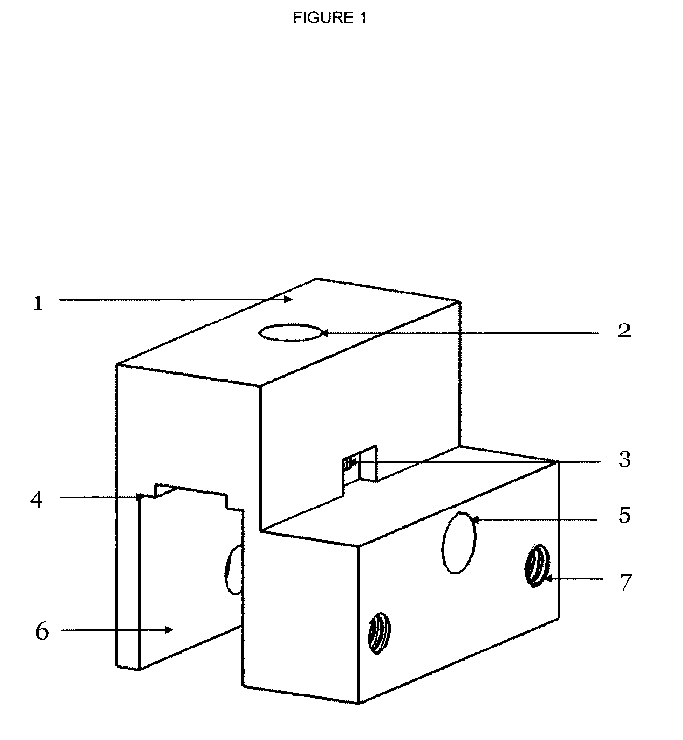

Figure 1. - Upper perspective view of the drill positioner with sight components.

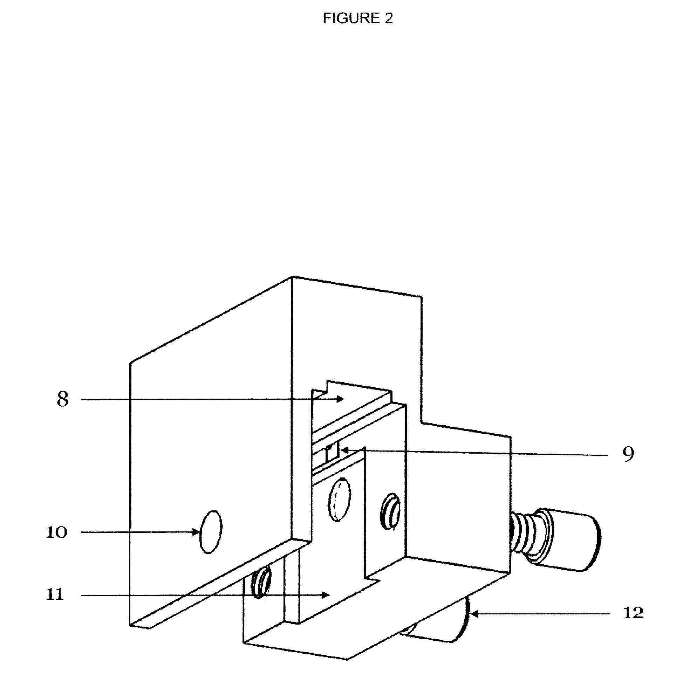

Figure 2. - Lower perspective view of the drill positioner with sight components.

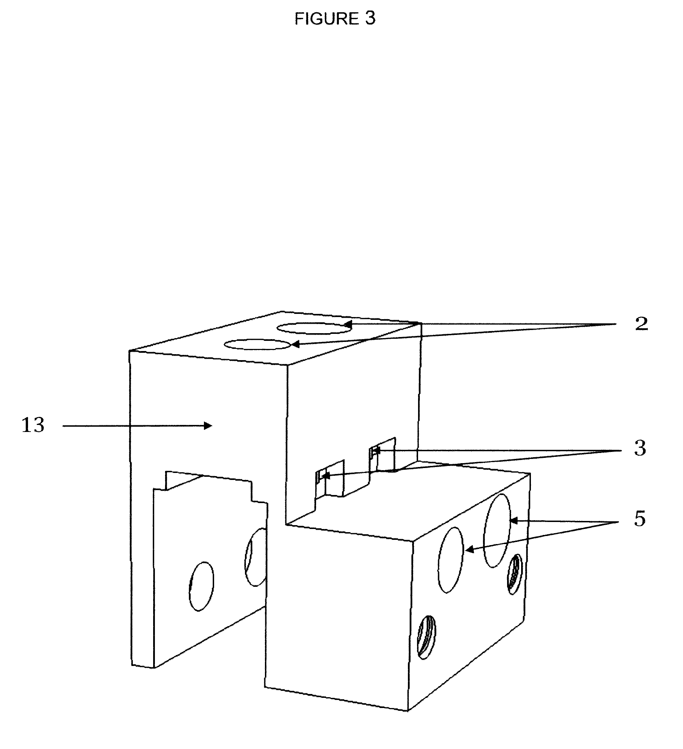

Figure 3. - Upper perspective view of the components that make up the drill positioner with sight with two guide bushings diameter.

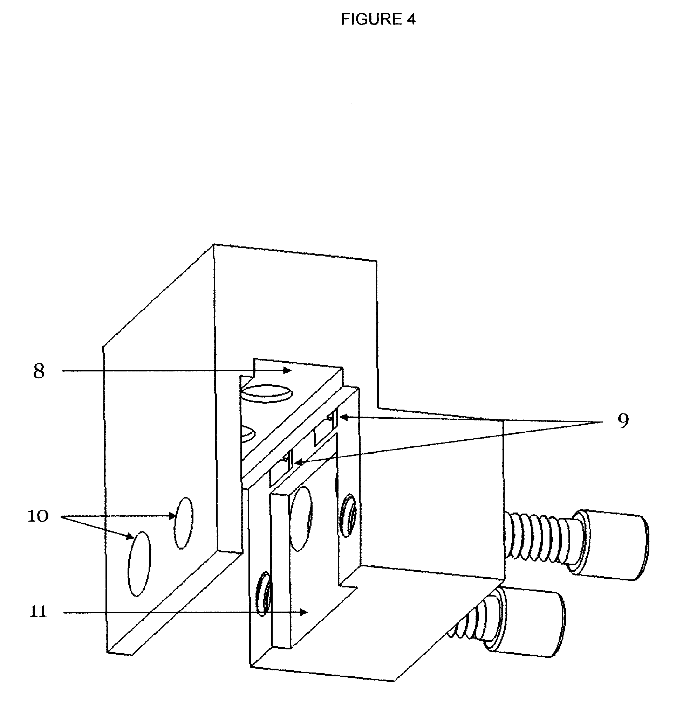

Figure 4. - Lower perspective view of the components that make up the drill positioner with sight with two guide bushings diameter.

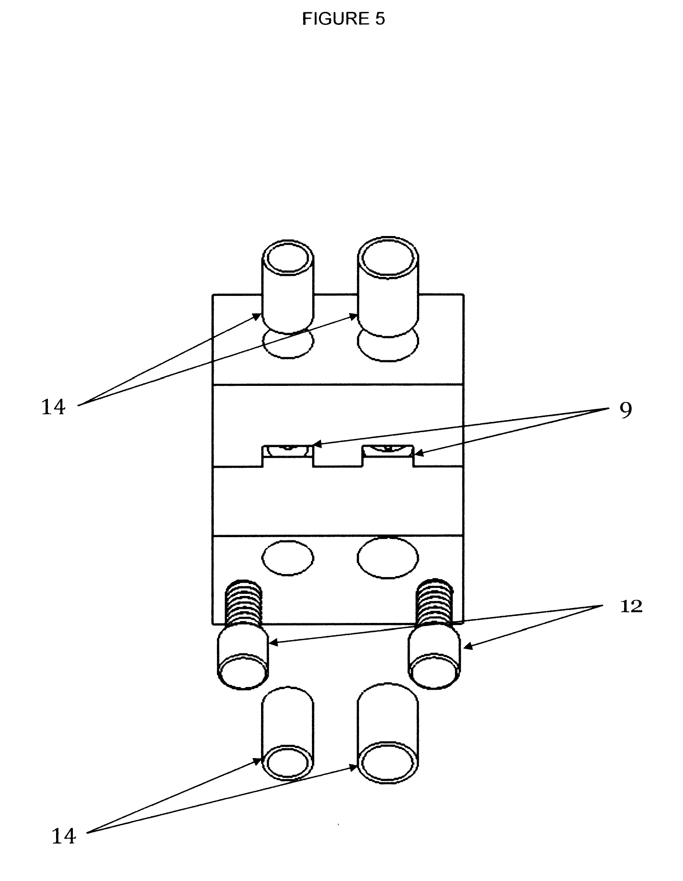

Figure 5. - Exploded view of the drill positioner with sight.

### DRAWING REFERENCE NUMERALS

1) Drill-fixing tool with sight.
2) Edge drill.
3) Guide.
4) End stop.
5) Side drill.
6) Channel for board fixing.
7) Board fixing thread.
8) Edge sawdust evacuation channel.
9) Sight.
10) Auxiliary drill.
11) Side sawdust evacuation channel.
12) Board fixing screw.
13) Drill-fixing tool with two sights.
14) Guide bushing.

The drill positioner with sight defines a guide bushing holder, which can be used in different board and drill thicknesses. The setting of the drill positioner with sight is carried out through a sight (9) to drill in the board edges, and with auxiliary drills (10) to drill the rest of the board surface.

When drilling with the drill positioner with sight to join the ends of two boards, it is necessary to mark the board edge of the side with the largest surface with a line; once the line is marked, the drill-fixing tool with sight (1) is introduced considering the thickness of the board, which is equal to the thickness of the channel for board fixing (6).

Within the Channel for board fixing (6) we place the board that we need to drill and we push it up to the end stop (4), then we look for the mark that we have already done with the sight (9), matching it with the guide (3) which is located inside the sight (9), then we tighten the board fixing screws (12) and once the drill-fixing tool with sight (1) is fixed, we can drill using the edge drill (2) or the side drill (5) as appropriate.

For the second way of drilling, the drill-fixing tool with sight (1) is used in the board centre, for what is necessary to use one board that has been already drilled in the edge in the aforementioned way, then we introduce wood dowel pins into the drilling holes.

Next, we mark the board with a line that joins the centre of the holes that we want to drill and draw a parallel line to the first one. The distance between the two lines must be equal to the thickness of the wall where the auxiliary drill (10) is hosted plus one half the width of the channel for board fixing (6). The next step is to fix the edge of the board with the wood dowel pins on the second line by means of pressure jacks so that the two lines previously drawn are still visible. After this, we introduce the auxiliary drill (10) in a wood dowel pin until we reach the board with the wood dowel pins, and in that moment it is possible to drill the board using the edge drill (2). This same operation has to be repeated in each of the wood dowel pins introduced before.

The drill positioner with sight has certain distinct features, one of them is that the position of the edge drill (2) is centred in the narrowest part of the channel for board fixing (6) making possible the drilling operation in the very centre of the edges of the boards.

The centre of the edge drill circumferences (2), as that of the side drill (5), the auxiliary drill (10) and the guide (3) of the sight (9) are located in the same plane.

To make the drill holes made with the edge drill (2) and the drill holes made with the side drill (5) match during the assembly, the centre of the side drill (5) is located at the same distance than one half the width of the channel for board fixing (6), measured perpendicularly from the centre of the side drill (5) circumference to the top of the channel for board fixing (6), the so called end stop (4).

The release of the drilling dust is made through the edge sawdust evacuation channel (8) whenever the drilling is performed with the edge drill (2). When drilling with the side drill (5) the release of the drilling dust is made through the side sawdust evacuation channel (11). This two channels reduce the contact between the drilling dust and the guide bushings (14) situated in the edge drill (2) and in the side drill (5) avoiding the drill-bit vibration during the drilling process and as a consequence, the enlargement of the drill hole.

The auxiliary drill centre (10) distance is equal to the thickness of the wall where it is hosted, plus one half the width of the channel for board fixing (6), measured from the lower edge of the drill-fixing tool with sight (1) to the end stop (4).

As a distinctive feature, the sight (9) is protected from the drilling dust ingress because there is no space connecting the sight (9) with any of the evacuation channels included in the drill-fixing tool with sight (1).

Since the drilling process can be done with multiple drill bits, the drill-fixing tool with sight (1) can feature different drill diameters that meet the same standards as those with only one diameter. Moreover, it has other distinctive elements and features such as:
- There is a regular distance between the centres of the edge drills (2) and they match the line that halves lengthwise the channel for board fixing (6).
- There is one sight (9), one side drill (5) and one auxiliary drill (10) for each edge drill (2).

To avoid damage in both the edge drill (2) and the side drill (5) of an aluminium or plastic drill positioner with sight, hard metal guide bushings (14) can be fitted in these holes.

The sight (9) is a hole made in the drill-fixing tool with sight (1) that allows the user to see the edge of the wood board that is to be drilled, so that a mark is easily made on the board and this mark can be matched with the guide (3). The guide (3) is a precision element which consists of a mark that is located inside the sight (9).

The board fixing threads (7) are parallel to the wood board's largest surface and are complemented by the board fixation screws (12) to avoid movement of the drill-fixing tool with sight (1).

The auxiliary drill's (10) diameter is equal to the guide bushing's (14) internal diameter, to the edge drill's (2) diameter and to the side drill's (5) diameter. The auxiliary drill (10), the guide bushing (14), the edge drill (2) and the side drill's (5) centres of circumference are located in the same plane.

## Claims

1. The drill positioner with sight consists of a piece made of the drill-fixing tool with sight (1) containing drill holes to fix the guide bushings (14), board fixing threads (7) that achieve the drill positioner with sight fixation to the work piece, sights (9) that allow seeing the marks made in the work piece and make them match with the guide (3) and therefore achieve an accurate position of the drill holes, sawdust evacuation channels (8) and (11), auxiliary pieces, guide bushings (14) and board fixation screws (12); The edge drill (2), side drill (5), auxiliary drill (10) and the sight (9) guide (3) line circumferences centres are located in the same plane.

2. As recited in claim 1, the drill positioner with sight is **characterized by** a drill-fixing tool with sight (1) which has one or more edge drills (2) whose circumferences centres are separated from each other at the same distance, the edge drill (2) centre matches with a line that halves lengthwise the channel for board fixing (6).

3. As recited in claims 1 and 2, the drill positioner is **characterized by** an edge drill (2), a sight (9), a side drill (5) and an auxiliary drill (10).

4. As recited in claim 1, the drill positioner with sight is **characterized by** a drill-fixing tool with sight (1) which has a channel for board fixing (6) with board fixing threads (7) which are parallel to the edge of the board, and with board fixation screws (12) to avoid the drill-fixing tool with sight (1) movement.

5. As recited in claim 1, the drill positioner with sight is **characterized by** a drill-fixing tool with sight (1) with a side sawdust evacuation channel to release the drilling dust when using the edge drill (2).

6. As recited in claim 1, the drill positioner with sight is **characterized by** an edge drill (2) and a side drill (5) which can be protected by guide bushings (14).

7. As recited in claim 1, the drill positioner with sight is **characterized by** a drill-fixing tool with sight (1) with guide bushings (14) which can have the same or a different edge drill (2) internal diameter, but the same internal diameter than the side drill (5) internal diameter, whose circumference centres are located in the same plane than the guide (3).

8. As recited in claims 1, 3 and 4, the drill positioner with sight is **characterized by** a side drill (5) located at the same distance than one half the width of the channel for board fixing (6), measured perpendicular from the centre of the side drill (5) circumference to the top of the channel for board fixing (6), called end stop (4).

9. As recited in claims 1, 3, 4 and 10, the drill positioner with sight is **characterized by** an auxiliary drill (10) whose diameter is equal to the guide bushing (14) internal diameter, to the edge drill (2) diameter and to the side drill (5) diameter. The auxiliary drill (10), the guide bushing (14), the edge drill (2) and the side drill (5) circumferences centres are located in the same plane.

10. As recited in claims 1, 3, 4, 10, and 11, the drill positioner with sight is **characterized by** an auxiliary drill (10) whose centre is located at a distance that is equal to the thickness of the wall where it is hosted plus one half the width of the channel for board fixing (6), measured from the drill-fixing tool with sight lower edge (1) to the end stop (4).

11. As recited in claim 1, the drill positioner with sight is **characterized by** a sight (9), which is a hole made in the drill positioner with sight fixation tool (1) and contains the guide (3) inside.
